# EUROPÄISCHE PATENTSCHRIFT

(11) **EP 3 615 835 B1**
(45) Veröffentlichungstag und Bekanntmachung des Hinweises auf die Patenterteilung: **24.03.2021**
(21) Anmeldenummer: 18720996.0
(22) Anmeldetag: 19.04.2018
(51) Int. Cl.: F16D 65/12

(54) **BREMSSCHEIBENANORDNUNG FÜR EINE SCHEIBENBREMSE EINES KRAFTFAHRZEUGS, VERFAHREN**
BRAKE DISC ASSEMBLY FOR A DISC BRAKE OF A MOTOR VEHICLE, AND METHOD
ENSEMBLE DISQUE DE FREIN POUR UN FREIN À DISQUE D'UN VÉHICULE, PROCÉDÉ

(30) Priorität: 27.04.2017 DE 102017207139
(43) Veröffentlichungstag der Anmeldung: 04.03.2020
(73) Patentinhaber: Robert Bosch GmbH, 70442 Stuttgart (DE)
(72) Erfinder: BOZOVIC, Ilija, 11450 Sopot (RS); LINEK, Karl-Heinz, 71686 Remseck (DE); LE BARZIC, Laurent, 67000 Strasbourg (FR)
(86) Internationale Anmeldenummer: PCT/EP2018/059981
(87) Internationale Veröffentlichungsnummer: WO 2018/197321

(56) Entgegenhaltungen:
- EP-A1- 0 352 502
- EP-A1- 1 092 889
- EP-A1- 2 980 436
- WO-A1-2012/101561

## Beschreibung

Die Erfindung betrifft eine Bremsscheibenanordnung für eine Scheibenbremse eines Kraftfahrzeugs, mit einem aus einem ersten Material gefertigten Reibring und mit einem aus einem zweiten Material gefertigten Bremsscheibentopf zur Lagerung des Reibrings, wobei der Reibring einen ersten insbesondere axial vorstehenden Montagering aufweist und der Bremsscheibentopf einen zweiten insbesondere axial vorstehenden Montagering, wobei die Montageringe jeweils mehrere über den Umfang verteilt angeordnete Drehmitnahmeelemente aufweisen, mittels welcher der Reibring und der Bremsscheibentopf formschlüssig drehfest miteinander verbunden sind.

Ferner betrifft die Erfindung ein Verfahren zum Herstellen einer Bremsscheibenanordnung für eine Scheibenbremse eines Kraftfahrzeugs.

### Stand der Technik

Bremsscheibenanordnungen der eingangs genannten Art sind aus dem Stand der Technik bekannt. So geht aus der Patentschrift EP 1 426 644 B1 eine Bremsscheibenanordnung mit einem Reibring und einem Bremsscheibentopf hervor, wobei der Reibring einen ersten insbesondere axial vorstehenden Montagering und der Bremsscheibentopf einen zweiten insbesondere axial vorstehenden Montagering aufweist. In dem ersten Montagering des Reibrings sind über dessen Umfang verteilt angeordnete axiale Nuten vorgesehen, in welche an dem zweiten Montagering des Bremsscheibentopfs ausgebildete Vorsprünge formschlüssig drehfest eingreifen. Darüber hinaus sind auch aus den Patentschriften DE 100 32 972 B4 und EP 1 355 075 B1 Bremsscheibenanordnungen bekannt, welche einen Reibring mit einem ersten Montagering und einen Bremsscheibentopf mit einem zweiten Montagering aufweist. Dabei sind der erste und der zweite Montagering jeweils durch als Niete ausgebildete Verbindungselemente miteinander verbunden. Die Offenlegungsschrift EP 0 352 502 A1 offenbart eine Bremsscheibenanordnung mit einem Reibring und einem Bremsscheibentopf, wobei der Bremsscheibentopf und der Reibring durch keilförmige Drehmitnahmeelemente, die sich in axialer Richtung erstrecken, miteinander verbunden sind. Aus der Offenlegungsschrift EP 1 092 889 A1 ist eine Verbindung eines Reibrings mit einem Bremsscheibentopf mittels Fixierbolzen bekannt. Die Offenlegungsschrift EP 2 980 436 A1 offenbart eine Bremsscheibenanordnung mit einem Reibring und einem Bremsscheibentopf, wobei der Reibring Vorsprünge aufweist, die zur Verbindung des Reibrings mit dem Bremsscheibentopf in Ausnehmungen des Bremsscheibentopfes eingreifen.

### Offenbarung der Erfindung

Erfindungsgemäß ist vorgesehen, dass die Drehmitnahmeelemente als von einer axialen Erstreckung abweichende schräg angeordnete Mitnahmestege ausgebildet sind. Die axiale Erstreckung entspricht dabei einer Erstreckung parallel zu einer Rotationsachse der Scheibenbremse. Der Vorteil der schräg zur axialen Erstreckung angeordneten Mitnahmestege ist, dass dadurch der erste und der zweite Montagering in einem formschlüssig drehfest miteinander verbundenen Zustand zusätzlich gegen eine axiale Verschiebung relativ zueinander gesichert sind. Im Vergleich zu beispielsweise parallel zur Rotationsachse angeordneten Mitnahmestegen bewirkt deren schräge Anordnung dabei, dass bei einer Verschiebung beispielsweise des Bremsscheibentopfs parallel zur Rotationsachse eine größere Widerstandskraft wirkt. Diese erschwert somit die Trennung von Bremsscheibentopf und Reibring. Wegen der schräg angeordneten Mitnahmestege ist es insbesondere erforderlich, beispielsweise den Bremsscheibentopf um die Rotationsachse zu drehen, so dass sich die Widerstandskraft reduziert und damit der Bremsscheibentopf von dem Reibring getrennt werden kann. Somit gewährleistet die erfindungsgemäße Bremsscheibenanordnung auf einfache Art und Weise eine stabile formschlüssige Verbindung von Bremsscheibentopf und Reibring, bei welcher der Bremsscheibentopf und Reibring sowohl gegen eine axiale und radiale Verschiebung als auch gegen ein Verdrehen relativ zueinander gesichert sind. Die radiale Verschiebung entspricht dabei einer Verschiebung in eine Richtung senkrecht zur Rotationsachse. Die erfindungsgemäße Bremsscheibenanordnung ist zudem mit geringem Materialaufwand und damit gewichtssparend realisierbar.

Gemäß einer bevorzugten Weiterbildung der Erfindung ist vorgesehen, dass die Drehmitnahmeelemente oder Mitnahmestege in einem Winkel von 20° bis 60°, insbesondere 30° bis 40°, vorzugsweise genau oder nahezu 35°, zu einer Drehachse oder Rotationsachse der Bremsscheibenanordnung ausgerichtet sind. Der Vorteil hierbei ist, dass die formschlüssige Verbindung zwischen Reibring und Bremsscheibentopf besonders stabil ist. Die Ausrichtung der Drehmitnahmeelemente oder Mitnahmestege gemäß den oben genannten Winkeln gewährleistet, dass insbesondere im formschlüssig drehfest miteinander verbundenen Zustand eine Verdrehung beispielsweise des Bremsscheibentopfs um einen besonders großen Verdrehwinkel notwendig ist, um diesen in axiale Richtung verschieben und damit von dem Reibring trennen zu können.

Vorzugsweise ist der Bremsscheibentopf als in und/oder an den Reibring gegossener Bremsscheibentopf ausgebildet. Der Vorteil hierbei ist, dass sich die Drehmitnahmeelemente des Bremsscheibentopfs durch das Eingießen des Bremsscheibentopfs in den Reibring ausbilden. Eine Ausbildung der Drehmitnahmeelemente an dem Bremsscheibentopf vor einer Montage oder Verbindung des Bremsscheibentopfs mit dem Reibring ist somit nicht notwendig. Vorzugsweise erfolgt durch das Eingießen oder Angießen des Bremsscheintopfs in/an den Reibring zusätzlich zu der formschlüssig drehfesten Verbindung eine stoffschlüssige Verbindung zwischen Bremsscheibentopf und Reibring, beispielsweise durch ein Einschmelzen des Materials des Bremsscheibentopfs in das Material des Reibrings.

Erfindungsgemäß ist vorgesehen, dass die Drehmitnahmeelemente oder Mitnahmestege als Verzahnung ausgebildet sind. Der Vorteil hierbei ist, dass der Reibring und der Bremsscheibentopf besonders sicher miteinander formschlüssig verbunden sind, wobei der Reibring vorzugweise eine Verzahnung aufweist, die komplementär zur Verzahnung des Bremsscheibentopfs ausgebildet ist. Der Formschluss erfolgt dann durch ein insbesondere spielfreies Ineinandergreifen der Verzahnung des Bremsscheibentopfs und der Verzahnung des Reibrings. Vorzugsweise erfolgt der Formschluss durch das Ein- oder Angießen des Bremsscheibentopfs in/an den Reibring, wobei sich in dem Bremsscheibentopf eine Verzahnung ausbildet, die komplementär zu der Verzahnung des Reibrings ausgebildet ist. Vorzugsweise ist vorgesehen, dass jeweils ein Zahn der Verzahnung durch jeweils einen Mitnahmesteg gebildet ist. Vorzugsweise sind die Mitnahmestege oder Zähne gleichmäßig über den Umfang verteilt angeordnet und insbesondere in einem vorgebbaren Abstand zueinander angeordnet.

Besonders bevorzugt ist vorgesehen, dass die Verzahnung derart ausgebildet ist, dass zumindest ein erster der Mitnahmestege und zumindest ein zu dem ersten Mitnahmesteg benachbarter zweiter der Mitnahmestege in unterschiedliche, insbesondere gegensätzliche Richtungen ausgerichtet sind. Dadurch ergibt sich der Vorteil, dass der Bremsscheibentopf und der Reibring gegen eine axiale und/oder radiale Verschiebung relativ zueinander besonders effektiv gesichert sind. Die Ausrichtung in unterschiedliche beziehungsweise gegensätzliche Richtungen bedeutet, dass der erste Mitnahmesteg in einem ersten vorgebbaren Winkel und der zweite Mitnahmesteg in einem zweiten vorgebbaren Winkel relativ zu der Drehachse ausgerichtet sind, wobei der erste Mitnahmesteg und der zweite Mitnahmesteg insbesondere voneinander wegweisend oder einander zugewandt ausgerichtet sind. Vorzugsweise sind mehrere erste und mehrere zweite Mitnahmestege vorgesehen. Bevorzugt sind dabei die ersten und zweiten Mitnahmestege jeweils abwechselnd voneinander wegweisend und einander zugewandt ausgerichtet, so dass sich ein zickzackförmiges Profil ausbildet. Beispielsweise sind dabei jeweils zwei benachbarte Mitnahmestege V-förmig oder vier benachbarte Mitnahmestege W-förmig ausgebildet, oder es ergibt sich eine über den gesamten Umfang erstreckende durchgehende Zickzackstruktur. Die einzelnen Drehmitnahmeelemente sind dabei insbesondere geradlinig ausgebildet. Optional weisen ein oder mehrere, insbesondere alle, der Drehmitnahmeelemente einen gekrümmten Verlauf auf.

Vorzugsweise weist die Verzahnung zumindest einen ersten einen und zweiten Mitnahmesteg auf, die einander kreuzend ausgebildet sind. Der Vorteil hierbei ist, dass sich durch das Kreuzen der Mitnahmestege eine besonders stabile axiale und/oder radiale Sicherung ausbildet. "Kreuzen" bedeutet hierbei, dass der erste und der zweite Mitnahmesteg, also jeweils zwei benachbarte Mitnahmestege, derart einander zugewandt ausgerichtet sind, dass sie eine X-Form bilden. Optional sind der erste und der zweite Mitnahmesteg derart einander zugewandt ausgerichtet, dass sie eine T-Form oder eine λ-Form bilden.

Besonders bevorzugt ist vorgesehen, dass die Verzahnung, insbesondere die Verzahnung des Reibrings, durch ein spanendes Verfahren hergestellt ist. Die Herstellung oder Ausbildung der Verzahnung erfolgt somit insbesondere durch ein Fräsen, Räumen oder Wälzschälen. Der Vorteil hierbei ist, dass die Verzahnung auf einfache Art und Weise kostengünstig und in kurzer Zeit herstellbar ist.

Vorzugsweise sind die Drehmitnahmeelemente oder Mitnahmestege des Reibrings an einer Mantelinnenfläche des ersten Montagerings ausgebildet, und die Drehmitnahmeelemente oder Mitnahmestege des Bremsscheibentopfs an einer Mantelaußenfläche des zweiten Montagrings. Die Mantelinnenfläche des Reibrings und die Mantelaußenfläche des Bremsscheibentopfs sind somit einander gegenüberliegend anordenbar oder angeordnet. Dies ermöglicht auf vorteilhafte Weise eine bauraumsparende Verbindung zwischen Bremsscheibentopf und Reibring. Alternativ ist vorgesehen, dass die Drehmitnahmeelemente des Reibrings an einer Mantelaußenfläche des ersten Montagerings und die Drehmitnahmeelemente des Bremsscheibentopfs an einer Mantelinnenfläche des zweiten Montagerings ausgebildet sind.

Besonders bevorzugt ist vorgesehen, dass die Drehmitnahmeelemente oder Mitnahmestege einen rechteckförmigen, dreieckförmigen, trapezförmigen oder evolventenförmigen Querschnitt aufweisen. Der Vorteil hierbei ist, dass die Querschnitte der Drehmitnahmeelemente, insbesondere die Drehmitnahmeelemente des Reibrings, leicht herstellbar sind und eine gute Kraftübertragung gewährleisten.

Gemäß einer bevorzugten Weiterbildung der Erfindung ist vorgesehen, dass der erste Reibring eine oder mehrere Radialöffnungen aufweist, in welche zumindest ein oder jeweils ein Fixierbolzen des Bremsscheibentopfs zur Fixierung des Bremsscheibentopfs an dem Reibring zumindest hineinragt, insbesondere hindurchragt. Hierdurch ergibt sich der Vorteil, dass zusätzlich zu der Sicherung durch die als Mitnahmestege ausgebildeten Drehmitnahmeelemente eine weitere, insbesondere formschlüssige Sicherung gegen ein Lösen der Verbindung vorgesehen ist. Dies verhindert die Möglichkeit einer Verschiebung von Bremsscheibentopf und Reibring in axialer und/oder radialer Richtung oder auch einer Verdrehung relativ zueinander. Die Radialöffnungen weisen vorzugsweise eine vorgebbare Tiefe oder Ausdehnung in radialer Richtung auf, wobei der Fixierbolzen bevorzugt eine Länge aufweist, um zumindest teilweise in die Radialöffnung hineinzuragen. Vorzugsweise sind die Radialöffnung und der Fixierbolzen dazu ausgebildet, den Reibring und den Bremsscheibentopf axial oder radial aneinander zu fixieren. Optional sind die Radialöffnung und der Fixierbolzen dazu ausgebildet, den Reibring und den Bremsscheibentopf axial und radial aneinander zu fixieren. Insbesondere bei einem Hindurchragen des Fixierbolzens durch die Radialöffnung ist die radiale Fixierung von Reibring und Bremsscheibentopf vorteilhaft möglich. Die radiale Fixierung erfolgt vorzugsweise durch eine Ausbildung eines Kragens an zumindest einem Ende des Fixierbolzens, wobei der Kragen durch Anschlag an beispielsweise die Mantelaußenfläche des ersten Montagerings eine Verschiebung in radialer Richtung verhindert.

Besonders bevorzugt ist vorgesehen, dass die jeweilige Radialöffnung als Radialbohrung ausgebildet ist. Dies gewährleistet auf vorteilhafte Weise, dass der Fixierbolzen vollständig durch die Radialöffnung hindurchragen oder eingeschoben werden kann, so dass eine besonders stabile, insbesondere formschlüssige Verbindung zwischen Fixierbolzen und Radialöffnung realisierbar ist. Zudem ist die als Radialbohrung ausgebildete Radialöffnung besonders einfach herzustellen, beispielsweise durch ein Bohrverfahren.

Besonders bevorzugt ist vorgesehen, dass der jeweilige Fixierbolzen als durch die zugehörige Radialöffnung gegossener Fixierbolzen des Bremsscheibentopfs ausgebildet ist. Der Vorteil hierbei ist, dass die Radialöffnung des Reibrings auf einfache Art und Weise insbesondere vollständig durch den Fixierbolzen oder Material des Fixierbolzens ausfüllbar ist. Die gewährleistet eine insbesondere spielfreie Verbindung zwischen Fixierbolzen und Reibring um damit eine Verbesserung der Fixierung. Vorzugsweise wird der Fixierbolzen oder das Material des Fixierbolzens insbesondere bei einem Gießen des Bremsscheibentopfs in die Radialöffnung des Bremsscheibentopfs eingegossen.

Weiterhin ist bevorzugt vorgesehen, dass der Fixierbolzen einstückig mit dem Bremsscheibentopf ausgebildet ist. Der Vorteil hierbei ist, dass der Fixierbolzen besonders fest mit dem Bremsscheibentopf verbunden ist. Dies gewährleistet insbesondere eine besonders sichere axiale Fixierung zwischen dem Reibring und dem Bremsscheibentopf durch den Fixierbolzen. Zudem ist der einstückig mit dem Bremsscheibentopf ausgebildete Fixierbolzen ein Element des Bremsscheibentopfs selbst, so dass zusätzliche Fixierelemente, welche nicht Bestandteil des Bremsscheibentopfs und/oder des Reibrings sind, zur axialen Fixierung nicht notwendig sind. Vorzugsweise erfolgt die einstückige Ausbildung des Fixierbolzens mit dem Bremsscheibentopf und/oder die Herstellung der Verbindung zwischen Fixierbolzen und Reibring durch das Gießen des Bremsscheibentopfes, insbesondere des zweiten Montagerings, an den Reibring, insbesondere den ersten Montagering. Vorzugsweise wird dabei die Radialöffnung des Reibrings durch das Material des Bremsscheibentopfs gefüllt, so dass sich dabei der Fixierbolzen einstückig mit dem Bremsscheibentopf ausbildet.

Das erfindungsgemäße Verfahren zum Herstellen einer Bremsscheibenanordnung für eine Bremsscheibe eines Kraftfahrzeugs nach einem oder mehreren der Ansprüche 1 bis 12, zeichnet sich dadurch aus, dass aus einem ersten Material ein Reibring und aus einem zweiten Material ein Bremsscheibentopf zur Lagerung des Reibrings gefertigt werden. Darüber hinaus wird an dem Reibring ein erster insbesondere axial vorstehender Montagering mit mehreren über den Umfang verteilt angeordneten Drehmitnahmeelementen und an dem Bremsscheibentopf ein zweiter insbesondere axial vorstehender Montagering mit mehreren über den Umfang verteilt angeordneten zweiten Drehmitnahmeelementen ausgebildet. Mittels der Drehmitnahmeelemente werden der Reibring und der Bremsscheibentopf formschlüssig drehfest miteinander verbunden. Die Drehmitnahmeelemente werden als von einer axialen Erstreckung abweichende schräg angeordnete Mitnahmestege ausgebildet. Es ergeben sich hierdurch die bereits genannten Vorteile. Insbesondere wird der Bremsscheibentopf in und/oder an dem Reibring gegossen, sodass er direkt an dem Reibring hergestellt wird, wodurch sich eine besonderes vorteilhafte Herstellung der Drehmitnahmeelemente des Bremsscheibentopfs durch die Drehmitnahmeelemente des Reibrings ergibt.

Weitere Vorteile und bevorzugte Merkmale ergeben sich insbesondere aus dem zuvor Beschriebenen sowie aus den Ansprüchen.

Im Folgenden soll die Erfindung anhand der Zeichnungen näher erläutert werden. Dazu zeigen im Folgenden
- Figur 1: eine Bremsscheibenanordnung mit einem Reibring und einem Bremsscheibentopf in einem miteinander unverbundenen Zustand in einer perspektivischen Darstellung,
- Figur 2: die Bremsscheibenanordnung von Figur 1 in einem miteinander verbundenen Zustand in einer vereinfachten Draufsicht,
- Figur 3: einen Ausschnitt eines ersten Montagerings des Reibrings in einer Draufsicht und
- Figur 4: einen Ausschnitt des ersten Montagerings in einer Querschnittsdarstellung.

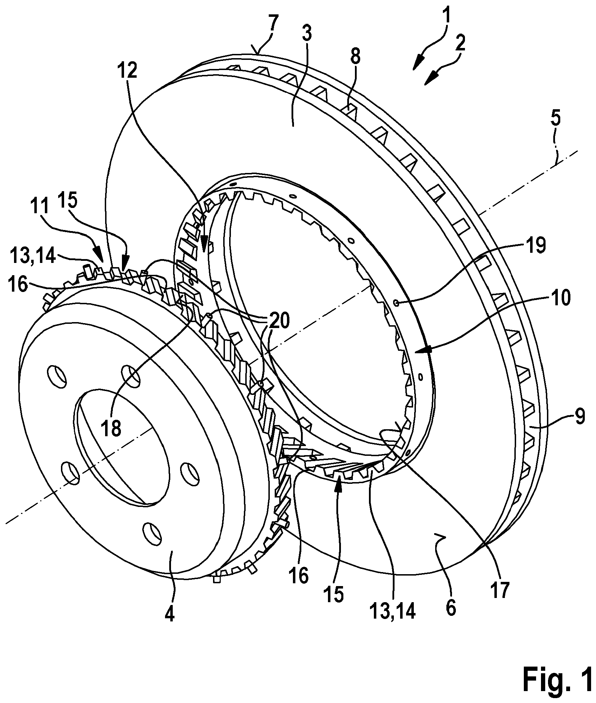

Figur 1 zeigt in einer Explosionsdarstellung eine Bremsscheibenanordnung 1 für eine Scheibenbremse 2 eines hier nicht dargestellten Kraftfahrzeugs, mit einem aus einem ersten Material, insbesondere einem Gusswerkstoff, beispielsweise Eisen, gefertigten Reibring 3 und mit einem aus einem zweiten Material, beispielsweise Aluminium oder einer Aluminium-Legierung, gefertigten Bremsscheibentopf 4 zur Lagerung des Reibrings 3.

Der Reibring 3 weist vorliegend in Richtung einer Drehachse 5 oder Rotationsachse beabstandet zueinander angeordnete Reibringscheiben 6, 7 auf, die durch zwischen den Reibringscheiben 6, 7 angeordnete, sich in radialer Richtung, also senkrecht zur Drehachse 5, erstreckende Stege 8 insbesondere einstückig miteinander verbunden sind. Dabei ist zwischen jeweils zwei benachbarten Stegen 8 ein Belüftungskanal 9 ausgebildet.

Der Reibring 3 weist weiterhin einen ersten axial vorstehenden Montagering 10 und der Bremsscheibentopf 4 einen zweiten axial vorstehenden Montagering 11 auf. Der erste Montagering 10 ist vorzugsweise an einer Innenumfangsfläche 12 des Reibrings 3 angeformt, insbesondere ohne dabei axial vorzustehen. Der erste Montagering 10 und der zweite Montagering 11 weisen jeweils mehrere über ihren Umfang verteilt angeordnete Drehmitnahmeelemente 13 auf, mittels welcher der Reibring 3 und der Bremsscheibentopf 4 formschlüssig drehfest miteinander verbunden sind. Die Drehmitnahmeelemente 13 der ersten Montagerings 10 und des zweiten Montagerings 11 sind jeweils als von einer axialen Erstreckung oder einer Erstreckung parallel zu der Drehachse 5 abweichende schräg angeordnete Mitnahmestege 14 ausgebildet.

Die schräg zur Drehachse 5 angeordneten Drehmitnahmeelemente 13 oder Mitnahmestege 14 des ersten Montagerings 10 und des zweiten Montagerings 11 sind als Schrägverzahnung ausgebildet. Damit weisen sowohl der erste Montagering 10 als auch der zweite Montagering 11 jeweils eine Verzahnung 15 auf. Die Verzahnung 15 des ersten Montagerings 10 ist bevorzugt komplementär zur Verzahnung 15 des zweiten Montagerings 11 ausgebildet. Die Verzahnung 15 des ersten Montagerings 10 und zweiten Montagerings 11 weist vorzugsweise im Querschnitt gesehen ein Zahnprofil auf, welches durch die Drehmitnahmeelemente 13 oder Mitnahmestege 14 und durch zwischen jeweils zwei Drehmitnahmeelementen 13 angeordnete Vertiefungen 16 gebildet ist. Die Drehmitnahmeelemente 13 sind vorzugsweise gleichmäßig über den Umfang des ersten Montagerings 10 und des zweiten Montagerings 11 verteilt angeordnet. Die Herstellung der Verzahnung 15, insbesondere der Verzahnung 15 des Reibrings 3, erfolgt vorzugsweise durch ein spanendes Verfahren, insbesondere ein Fräsen, Räumen oder Wälzschälen.

Vorliegend sind die Mitnahmestege 14 der Verzahnung 15 jeweils parallel zueinander ausgerichtet. Alternativ oder zusätzlich ist vorgesehen, die Verzahnung 15 derart auszubilden, dass zumindest ein erster der Mitnahmestege 14 und zumindest ein zu dem ersten Mitnahmesteg 14 benachbarter zweiter der Mitnahmestege 14 in unterschiedliche, insbesondere gegensätzliche Richtungen ausgerichtet sind. Es können auch mehrere erste und zweite Mitnahmestege 14 vorgesehen sein, welche jeweils in unterschiedliche beziehungsweise gegensätzliche Richtungen ausgerichtet sind. Dies ermöglicht es, eine Verzahnung 15 mit insbesondere einem zickzackförmigen Profil auszubilden, wobei dazu vorzugsweise jeweils zumindest zwei benachbarte Mitnahmestege 14 V-förmig oder jeweils zumindest vier benachbarte Mitnahmestege 14 W-förmig ausgebildet sind. Alternativ oder zusätzlich ist vorgesehen, dass zumindest der erste der Mitnahmestege 14 und zumindest der zweite der Mitnahmestege 14 einander kreuzend ausgebildet sind. Vorzugsweise sind dabei zumindest zwei benachbarte Mitnahmestege 14 derart einander zugewandt ausgerichtet, dass sie eine X-Form, T-Form oder λ-Form ausbilden.

Bevorzugt sind die Drehmitnahmeelemente 13 oder Mitnahmestege 14 des Reibrings 3 an einer Mantelinnenfläche 17 des ersten Montagerings 10 und die Drehmitnahmeelemente 13 oder Mitnahmestege 14 des Bremsscheibentopfs 4 an einer Mantelaußenfläche 18 des zweiten Montagerings 11 ausgebildet. Dies gewährleistet insbesondere eine einfache und baumraumsparende Anordnung von Reibring 3 und Bremsscheibentopf 4.

Die formschlüssige Verbindung zwischen Reibring 3 und Bremsscheibentopf 4 erfolgt insbesondere dadurch, dass der Bremsscheibentopf 4 direkt an dem Reibring 3 durch einen Gießvorgang hergestellt wird, wobei durch ein Eingießen und/oder Angießen des Bremsscheibentopfs 4, insbesondere des zweiten Montagerings 11, in und/oder an den Reibring 3, insbesondere den ersten Montagering 10, eine besonders feste Verbindung entsteht, wobei vorzugsweise sich die Drehmitnahmeelemente 13 und/oder die zur Verzahnung 15 des Reibrings 3 komplementäre Verzahnung 15 des Bremsscheibentopfs 4 erst bei dem Eingießen des Bremsscheibentopfs 4 in den Reibring 3 ausbilden. Durch das Eingießen ist ein besonders sicheres, insbesondere spielfreies, Ineinandergreifen der Verzahnung 15 des ersten Montagerings 10 und der Verzahnung 15 des zweiten Montagerings 11, gewährleistet. Vorzugweise ist zusätzlich oder alternativ vorgesehen, dass der Bremsscheibentopf 4 und der Reibring 3 durch das Eingießen des Bremsscheibentopfs 4 in den Reibring 3 stoffschlüssig miteinander verbunden sind, beispielsweise durch ein Einschmelzen des Materials des Bremsscheibentopfs 4 in das Material des Reibrings 3.Durch die schräg zur axialen Erstreckung oder zur Drehachse 5 angeordneten Mitnahmestege 14 ist gewährleistet, dass der erste Montagering 10 und der zweite Montagering 11 im formschlüssig drehfest und/oder stoffschlüssig miteinander verbundenen Zustand sowohl gegen eine Verschiebung in eine Drehrichtung der Drehachse 5 als auch gegen eine axiale sowie radiale Verschiebung relativ zueinander gesichert sind. Die Sicherung gegen die axiale Verschiebung erfolgt insbesondere dadurch, dass durch die schräg angeordneten Mitnahmestege 14 und das Ineinandergreifen der vorzugsweise komplementär zueinander ausgebildeten Verzahnungen 15 eine Verdrehung in Drehrichtung der Drehachse 5, beispielsweise des Bremsscheibentopfs 4, notwendig ist, um diesen parallel zur Drehachse 5 verschieben und damit von dem Reibring 3 trennen zu können. Die formschlüssig drehfeste und/oder stoffschlüssige Verbindung verhindert dabei diese notwendige Verdrehung insbesondere im Betrieb der Scheibenbremse 2.

Um die Verbindung von Reibring 3 und Bremsscheibentopf 4 zusätzlich zu sichern, weist der Reibring 3 vorzugsweise mehrere Radialöffnungen 19 und der Bremsscheibentopf mehrere Fixierbolzen 20 auf, wobei bevorzugt vorgesehen ist, dass in jeweils eine Radialöffnung 19 jeweils ein Fixierbolzen 20 zur Fixierung des Bremsscheibentopfs 4 an dem Reibring 3 zumindest hineinragt, insbesondere hindurchragt. Bevorzugt ist vorgesehen, dass der Fixierbolzen 20 einstückig mit dem Bremsscheibentopf 4 ausgebildet ist. Um ein Hindurchragen des Fixierbolzens 20 durch die Radialöffnung 19 zu gewährleisten, ist die Radialöffnung 19 vorzugsweise als Radialbohrung ausgebildet. Die Verbindung von Reibring 3 und Bremsscheibentopf 4 durch die Fixierbolzen 20 gewährleistet insbesondere eine weitere formschlüssig und/oder stoffschlüssige Verbindung, durch welche der Reibring 3 und der Bremsscheibentopf 4 axial und/oder radial aneinander fixierbar sind.

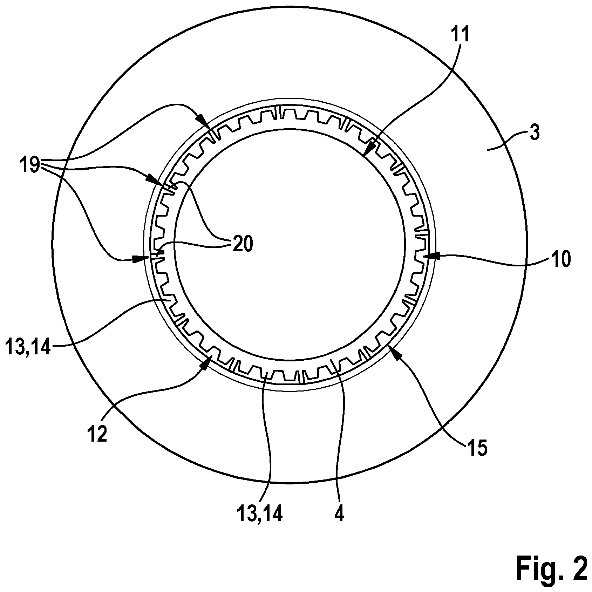

Figur 2 zeigt den Reibring 3 und den Bremsscheibentopf 4 in einem formschlüssig drehfest und/oder stoffschlüssig miteinander verbundenen Zustand in einer vereinfachten Draufsicht. Die formschlüssige und/oder stoffschlüssige Verbindung erfolgt insbesondere durch das Ineinandergreifen der Drehmitnahmeelemente 13 oder Verzahnungen 15 von Reibring 3 und Bremsscheibentopf 4.

Um die weitere formschlüssige und/oder stoffschlüssige Verbindung herzustellen ist vorzugsweise vorgesehen, dass ein jeweiliger Fixierbolzen 20 als durch die Radialöffnung 19 gegossener Fixierbolzen 20 des Bremsscheibentopfs 4 ausgebildet ist.

Vorzugsweise erfolgt die Herstellung der weiteren formschlüssigen Verbindung zwischen Bremsscheibentopf 4 und Reibring 3 durch ein Angießen des Bremsscheibentopfes 4, insbesondere des zweiten Montagerings 11, an den Reibring 3, insbesondere den ersten Montagering 10. Vorzugsweise wird dabei die Radialöffnung 19 des Reibrings 3 durch das Material des Bremsscheibentopfs 4 gefüllt, so dass sich dabei der Fixierbolzen 20, welcher vorzugsweise durch das Material des Bremsscheibentopfs 4 gebildet ist, einstückig mit dem Bremsscheibentopf 4 ausbildet.

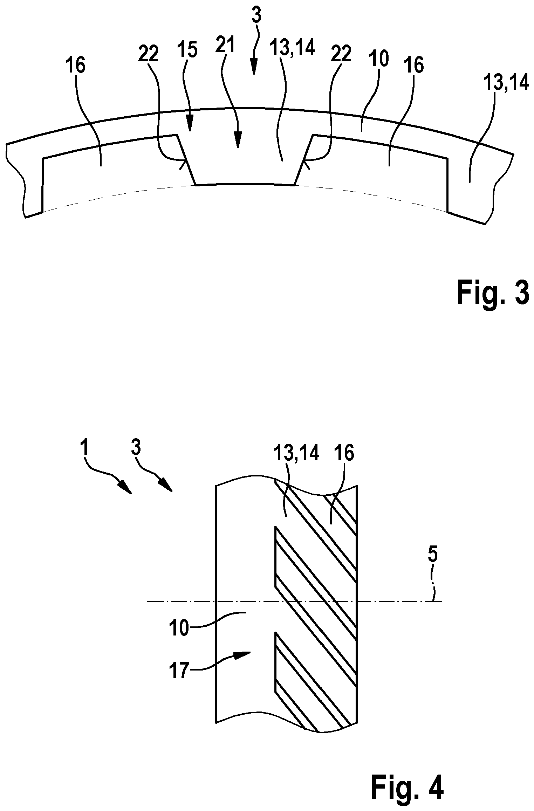

Figur 3 zeigt einen Ausschnitt des ersten Montagerings 10 des Reibrings 3 in einer vereinfachten Draufsicht. Zu erkennen ist die durch die Drehmitnahmeelemente 13 oder Mitnahmestege 14 und die Vertiefungen 16 gebildete Verzahnung 15. Dabei wird vorzugsweise jeweils ein Zahn 21 der Verzahnung 15 durch jeweils ein Drehmitnahmeelement 13 beziehungsweise einen Mitnahmesteg 14 gebildet. Ein jeweiliger Zahn 21 der Verzahnung 15 weist vorzugsweise eine Höhe oder Zahnhöhe von 2mm bis 10mm, insbesondere 5mm bis 7mm, auf. Die Zahnhöhe entspricht vorliegend einer Erstreckung des Zahns 21 in radialer Richtung beziehungsweise in Richtung der Drehachse 5. Bevorzugt ist vorgesehen, dass die Drehmitnahmeelemente 13 einen rechteckförmigen, dreieckförmigen, trapezförmigen oder evolventenförmigen Querschnitt aufweisen. Das vorliegend einen trapezförmigen Querschnitt aufweisende Drehmitnahmeelement 13 weist insbesondere gerade beziehungsweise ungekrümmte und senkrecht zur Drehachse 5 schräg ausgerichtete Zahnflanken 22 auf.

Figur 4 zeigt einen Ausschnitt der Mantelinnenfläche 17 des ersten Montagerings 10 des Reibrings 3 in einer Querschnittsdarstellung. Zu erkennen sind Vertiefungen 16, in welche Drehmitnahmeelemente 13 oder Mitnahmestege 14 eines hier nicht dargestellten Bremsscheibentopfs 4 bei einer formschlüssigen Verbindung eingreifen. Zudem sind die als von einer axialen Erstreckung abweichend schräg angeordneten Drehmitnahmeelemente 13 oder Mitnahmestege 14 des Reibrings 3 dargestellt. Die Mitnahmestege 14 sind vorzugsweise in einem Winkel von 20° bis 60°, insbesondere 30° bis 40°, vorzugsweise zumindest im Wesentlichen 35°, zu der Drehachse 5 der Bremsscheibenanordnung 1 ausgerichtet.

## Patentansprüche

1. Bremsscheibenanordnung (1) für eine Scheibenbremse (2) eines Kraftfahrzeugs, mit einem aus einem ersten Material gefertigten Reibring (3) und mit einem aus einem zweiten Material gefertigten Bremsscheibentopf (4) zur Lagerung des Reibrings (3), wobei der Reibring (3) einen ersten insbesondere axial vorstehenden Montagering (10) aufweist und der Bremsscheibentopf (4) einen zweiten insbesondere axial vorstehenden Montagering (11), wobei die Montageringe (10,11) jeweils mehrere über den Umfang verteilt angeordnete Drehmitnahmeelemente (13) aufweisen, mittels welcher der Reibring (3) und der Bremsscheibentopf (4) formschlüssig drehfest miteinander verbunden sind, **dadurch gekennzeichnet, dass** die Drehmitnahmeelemente (13) als von einer axialen Erstreckung abweichende schräg angeordnete Mitnahmestege (14) ausgebildet sind, wobei die Mitnahmestege (14) des ersten Montagerings (10) und die Mitnahmestege (14) des zweiten Montagerings (11) jeweils als Schrägverzahnung (15) ausgebildet sind.

2. Bremsscheibenanordnung nach Anspruch 1, **dadurch gekennzeichnet, dass** die Mitnahmestege (14) in einem Winkel von 20° bis 60°, insbesondere 30° bis 40°, vorzugsweise genau oder nahezu 35° zu einer Drehachse (5) der Bremsscheibenanordnung (1) ausgerichtet sind.

3. Bremsscheibenanordnung nach einem der vorhergehenden Ansprüche, **dadurch gekennzeichnet, dass** der Bremsscheibentopf (4) als in und/oder an den Reibring (3) gegossener Bremsscheibentopf (4) ausgebildet ist.

4. Bremsscheibenanordnung nach einem der vorhergehenden Ansprüche, **dadurch gekennzeichnet, dass** zumindest ein erster der Mitnahmestege (14) und zumindest ein zu dem ersten Mitnahmesteg (14) benachbarter zweiter der Mitnahmestege (14) in unterschiedliche, insbesondere gegensätzliche Richtungen ausgerichtet sind.

5. Bremsscheibenanordnung nach Anspruch 4, **dadurch gekennzeichnet, dass** die Verzahnung (15) zumindest einen ersten und einen zweiten Mitnahmesteg (14) aufweist, die einander kreuzend ausgebildet sind.

6. Bremsscheibenanordnung nach einem der vorhergehenden Ansprüche, **dadurch gekennzeichnet, dass** zumindest die Drehmitnahmeelemente (13) des Reibrings (3) durch ein spanendes Verfahren hergestellt sind.

7. Bremsscheibenanordnung nach einem der vorhergehenden Ansprüche, **dadurch gekennzeichnet, dass** die Mitnahmestege (14) des Reibrings (3) an einer Mantelinnenfläche (17) des ersten Montagerings (10) ausgebildet sind, und die Mitnahmestege (14) des Bremsscheibentopfs (4) an einer Mantelaußenfläche (18) des zweiten Montagerings (11).

8. Bremsscheibenanordnung nach einem der vorhergehenden Ansprüche, **dadurch gekennzeichnet, dass** die Mitnahmestege (14) einen rechteckförmigen, dreieckförmigen, trapezförmigen oder evolventenförmigen Querschnitt aufweisen.

9. Bremsscheibenanordnung nach einem der vorhergehenden Ansprüche, **dadurch gekennzeichnet, dass** der erste Reibring (3) eine oder mehrere Radialöffnungen (19) aufweist, in welche zumindest ein oder jeweils ein Fixierbolzen (20) des Bremsscheibentopfs (4) zur Fixierung des Bremsscheibentopfs (4) an dem Reibring (3) zumindest hineinragt, insbesondere hindurchragt.

10. Bremsscheibenanordnung nach einem der vorhergehenden Ansprüche, **dadurch gekennzeichnet, dass** die jeweilige Radialöffnung (19) als Radialbohrung ausgebildet ist.

11. Bremsscheibenanordnung nach einem der vorhergehenden Ansprüche, **dadurch gekennzeichnet, dass** der jeweilige Fixierbolzen (20) als durch die zugehörige Radialöffnung (19) gegossener Fixierbolzen (20) des Bremsscheibentopfs (4) ausgebildet ist.

12. Bremsscheibenanordnung nach einem der vorhergehenden Ansprüche, **dadurch gekennzeichnet, dass** der Fixierbolzen (20) einstückig mit dem Bremsscheibentopf (4) ausgebildet ist.

13. Verfahren zum Herstellen einer Bremsscheibenanordnung (1) für eine Scheibenbremse (2) eines Kraftfahrzeugs nach einem oder mehreren der Ansprüche 1 bis 12, wobei aus einem ersten Material ein Reibring (3) und aus einem zweiten Material ein Bremsscheibentopf (4) zur Lagerung des Reibrings (3) gefertigt werden, wobei an dem Reibring (3) ein erster insbesondere axial vorstehender Montagering (10) und an dem Bremsscheibentopf (4) ein zweiter insbesondere axial vorstehender Montagering (11) ausgebildet werden, und wobei an den Montageringen (10,11) jeweils mehrere über den Umfang verteilt angeordnete Drehmitnahmeelemente (13) ausgebildet werden, mittels welcher der Reibring (3) und der Bremsscheibentopf (4) formschlüssig drehfest miteinander verbunden sind, **dadurch gekennzeichnet, dass** die Drehmitnahmeelemente (13) als von einer axialen Erstreckung abweichende schräg angeordnete Mitnahmestege (14) ausgebildet werden, sodass die Mitnahmestege (14) des ersten Montagerings (10) und die Mitnahmestege (14) des zweiten Montagerings (11) jeweils eine Schrägverzahnung (15) ausbilden.

## Claims

1. Brake disc assembly (1) for a disc brake (2) of a motor vehicle, having a friction ring (3) made from a first material and having a brake disc chamber (4) which for mounting the friction ring (3) is made from a second material, wherein the friction ring (3) has a first, in particular axially projecting, assembly ring (10), and the brake disc chamber (4) has a second, in particular axially projecting, assembly ring (11), wherein the assembly rings (10, 11) have in each case a plurality of rotary entrainment elements (13) which are disposed so as to be distributed across the circumference and by means of which the friction ring (3) and the brake disc chamber (4) are connected to one another in a form-fitting and rotationally fixed manner, **characterized in that** the rotary entrainment elements (13) are configured as obliquely disposed entrainment webs (14) that deviate from an axial extent, wherein the entrainment webs (14) of the first assembly ring (10) and the entrainment webs (14) of the second assembly ring (11) each are configured as a helical toothing (15).

2. Brake disc assembly according to Claim 1, **characterized in that** the entrainment webs (14) in relation to a rotation axis (5) of the brake disc assembly (1) are aligned at an angle of 20° to 60°, in particular 30° to 40°, preferably exactly or almost 35°.

3. Brake disc assembly according to one of the preceding claims, **characterized in that** the brake disc chamber (4) is configured as a brake disc chamber (4) cast into and/or onto the friction ring (3) .

4. Brake disc assembly according to one of the preceding claims, **characterized in that** at least one first of the entrainment webs (14) and at least one second of the entrainment webs (14) adjacent to the first entrainment web (14) are aligned in different, in particular opposite, directions.

5. Brake disc assembly according to Claim 4, **characterized in that** the toothing (15) has at least one first and one second entrainment web (14), said entrainment webs (14) being configured so as to intersect.

6. Brake disc assembly according to one of the preceding claims, **characterized in that** at least the rotary entrainment elements (13) of the friction ring (3) are produced by a subtractive method.

7. Brake disc assembly according to one of the preceding claims, **characterized in that** the entrainment webs (14) of the friction ring (3) are configured on a shell internal face (17) of the first assembly ring (10), and the entrainment webs (14) of the brake disc chamber (4) are configured on a shell external face (18) of the second assembly ring (11).

8. Brake disc assembly according to one of the preceding claims, **characterized in that** the entrainment webs (14) have a rectangular, triangular, trapezoidal or involute cross section.

9. Brake disc assembly according to one of the preceding claims, **characterized in that** the first friction ring (3) has one or a plurality of radial openings (19), at least one or in each case one fixing pin (20) of the brake disc chamber (4) for fixing the brake disc chamber (4) on the friction ring (3) at least protruding into said radial opening/openings (19), in particular protruding through said radial opening/openings (19).

10. Brake disc assembly according to one of the preceding claims, **characterized in that** the respective radial opening (19) is configured as a radial bore.

11. Brake disc assembly according to one of the preceding claims, **characterized in that** the respective fixing pin (20) is configured as fixing pin (20) of the brake disc chamber (4) that is cast so as to penetrate the associated radial opening (19) .

12. Brake disc assembly according to one of the preceding claims, **characterized in that** the fixing pin (20) is configured so as to be integral to the brake disc chamber (4).

13. Method for producing a brake disc assembly (1) for a disc brake (2) of a motor vehicle according to one or a plurality of Claims 1 to 12, wherein a friction ring (3) is made from a first material, and a brake disc chamber (4) for mounting the friction ring (3) is made from a second material, wherein a first, in particular axially projecting, assembly ring (10) is configured on the friction ring (3), and a second, in particular axially projecting, assembly ring (11) is configured on the brake disc chamber (4), and wherein a plurality of rotary entrainment elements (13) which are disposed so as to be distributed across the circumference and by means of which the friction ring (3) and the brake disc chamber (4) are connected to one another in a form-fitting and rotationally fixed manner are in each case configured on the assembly rings (10, 11), **characterized in that** the rotary entrainment elements (13) are configured as obliquely disposed entrainment webs (14) that deviate from an axial extent such that the entrainment webs (14) of the first assembly ring (10) and the entrainment webs (14) of the second assembly ring (11) each configure a helical toothing (15).

## Revendications

1. Ensemble disque de frein (1) pour un frein à disque (2) d'un véhicule automobile, comportant une bague de friction (3) fabriquée à partir d'une première matière et comportant une nacelle de disque de frein (4), fabriquée à partir d'une deuxième matière, pour le montage de la bague de friction (3), la bague de friction (3) comprenant une première bague de montage (10) faisant saillie en particulier axialement et la nacelle de disque de frein (4) comprenant une deuxième bague de montage (11) faisant saillie en particulier axialement, les bagues de montage (10, 11) comprenant respectivement plusieurs éléments d'entraînement en rotation (13) disposés de manière répartie sur la périphérie, au moyen desquels la bague de friction (3) et la nacelle de disque de frein (4) sont reliées l'une à l'autre de manière solidaire en rotation par complémentarité de forme, **caractérisé en ce que** les éléments d'entraînement en rotation (13) sont réalisés sous forme de nervures d'entraînement (14) disposées de manière oblique et divergeant d'une étendue axiale, les nervures d'entraînement (14) de la première bague de montage (10) et les nervures d'entraînement (14) de la deuxième bague de montage (11) étant réalisées respectivement sous forme de denture hélicoïdale (15).

2. Ensemble disque de frein selon la revendication 1, **caractérisé en ce que** les nervures d'entraînement (14) sont orientées suivant un angle de 20° à 60°, en particulier de 30° à 40°, de préférence exactement ou pratiquement de 35° par rapport à un axe de rotation (5) de l'ensemble disque de frein (1).

3. Ensemble disque de frein selon l'une des revendications précédentes, **caractérisé en ce que** la nacelle de disque de frein (4) est réalisée sous forme de nacelle de disque de frein (4) coulée dans et/ou sur la bague de friction (3).

4. Ensemble disque de frein selon l'une des revendications précédentes, **caractérisé en ce qu'**au moins une première des nervures d'entraînement (14) et au moins une deuxième des nervures d'entraînement (14) adjacente à la première nervure d'entraînement (14) sont orientées dans des directions différentes, en particulier opposées.

5. Ensemble disque de frein selon la revendication 4, **caractérisé en ce que** la denture (15) comprend au moins une première et une deuxième nervure d'entraînement (14) qui sont réalisées de manière à se croiser mutuellement.

6. Ensemble disque de frein selon l'une des revendications précédentes, **caractérisé en ce qu'**au moins les éléments d'entraînement en rotation (13) de la bague de friction (3) sont produits par un procédé d'enlèvement de copeaux.

7. Ensemble disque de frein selon l'une des revendications précédentes, **caractérisé en ce que** les nervures d'entraînement (14) de la bague de friction (3) sont réalisées sur une surface d'enveloppe intérieure (17) de la première bague de montage (10), et les nervures d'entraînement (14) de la nacelle de disque de frein (4) sont réalisées sur une surface d'enveloppe extérieure (18) de la deuxième bague de montage (11).

8. Ensemble disque de frein selon l'une des revendications précédentes, **caractérisé en ce que** les nervures d'entraînement (14) présentent une section transversale rectangulaire, triangulaire, trapézoïdale ou en forme de développante.

9. Ensemble disque de frein selon l'une des revendications précédentes, **caractérisé en ce que** la première bague de friction (3) comprend une ou plusieurs ouvertures radiales (19) dans lesquelles au moins un ou respectivement un tenon de fixation (20) de la nacelle de disque de frein (4) au moins pénètre pour la fixation de la nacelle de disque de frein (4) à la bague de friction (3), en particulier traverse celle(s)-ci.

10. Ensemble disque de frein selon l'une des revendications précédentes, **caractérisé en ce que** l'ouverture radiale respective (19) est réalisée sous forme d'alésage radial.

11. Ensemble disque de frein selon l'une des revendications précédentes, **caractérisé en ce que** le tenon de fixation respectif (20) est réalisé sous forme de tenon de fixation (20) de la nacelle de disque de frein (4) coulé à travers l'ouverture radiale associée (19) .

12. Ensemble disque de frein selon l'une des revendications précédentes, **caractérisé en ce que** le tenon de fixation (20) est réalisé d'une seule pièce avec la nacelle de disque de frein (4).

13. Procédé de production d'un ensemble disque de frein (1) pour un frein à disque (2) d'un véhicule automobile selon l'une ou plusieurs des revendications 1 à 12, une bague de friction (3) étant fabriquée à partir d'une première matière et une nacelle de disque de frein (4) pour le montage de la bague de friction (3) étant fabriquée à partir d'une deuxième matière, une première bague de montage (10) faisant saillie en particulier axialement étant réalisée sur la bague de friction (3) et une deuxième bague de montage (11) faisant saillie en particulier axialement étant réalisée sur la nacelle de disque de frein (4), et respectivement plusieurs éléments d'entraînement en rotation (13) disposés de manière répartie sur la périphérie étant réalisés sur les bagues de montage (10, 11), au moyen desquels la bague de friction (3) et la nacelle de disque de frein (4) sont reliées l'une à l'autre de manière solidaire en rotation par complémentarité de forme, **caractérisé en ce que** les éléments d'entraînement en rotation (13) sont réalisés sous forme de nervures d'entraînement (14) disposées de manière oblique et divergeant d'une étendue axiale, de sorte que les nervures d'entraînement (14) de la première bague de montage (10) et les nervures d'entraînement (14) de la deuxième bague de montage (11) forment respectivement une denture hélicoïdale (15).
